# EUROPÄISCHE PATENTSCHRIFT

(11) **EP 0 335 070 B1**
(45) Veröffentlichungstag und Bekanntmachung des Hinweises auf die Patenterteilung: **26.05.1993**
(21) Anmeldenummer: 89101060.5
(22) Anmeldetag: 21.01.1989
(51) Int. Cl.: H05B 6/78, A23L 3/02, F24C 7/02, A23L 1/025

(54) **Vorrichtung zum kontinuierlichen Erwärmen, Pasteurisieren oder Sterilisieren von Lebensmitteln oder dergleichen**
Device for continuous heating, pasteurizing or sterilizing of food or the like
Dispositif de chauffage, de pasteurisation ou de stérilisation continus de produits alimentaires ou similaires

(30) Priorität: 31.03.1988 DE 3811063
(43) Veröffentlichungstag der Anmeldung: 04.10.1989
(73) Patentinhaber: HERMANN BERSTORFF Maschinenbau GmbH, D-30627 Hannover (Kleefeld) (DE)
(72) Erfinder: Skubich, Rolf, D-3012 Langenhagen 1 (DE)

(56) Entgegenhaltungen:
- EP-A- 0 269 073
- DE-A- 3 447 544
- US-A- 2 763 757
- US-A- 3 745 291

## Beschreibung

Die Erfindung betrifft eine Vorrichtung der Gattung, wie beschrieben im Oberbegriff von Anspruch 1.

Aus der DE 34 47 544 A1 ist eine Mikrowellenbehandlungskammer bekannt, mit in die Kammern ragenden Mikrowelleneinspeisekanälen. Derartige, fast bis zur Produktoberfläche reichende Einspeisekanäle haben den Vorzug, daß die Mikrowellenenergie verlustfreier direkt in das Produkt eingeleitet werden kann und dort in Wärme umgesetzt wird, wobei ein bestimmter Abstand vom Austritt aus den Einspeisekanälen bis zum Produkt eingehalten werden muß.

Sollen größere, z.B. höhere Packungen, mit Mikrowellenenergie beaufschlagt werden, muß eine spezielle, dieser Packungshöhe und einer vergrößerten Packungsoberfläche angepaßte neue Anlage eingesetzt werden, was in vielen Fällen sehr unwirtschaftlich ist, weil z.T. nur relativ geringe Stückzahlen bestimmter Produkte einer Mikrowellenbehandlung unterworfen werden.

Es ist die Aufgabe der Erfindung, eine kontinuierliche Vorrichtung zum Erwärmen, Pasteurisieren oder Sterilisieren mittels Mikrowellenenergie vorzuschlagen, die unabhängig von einer Packungsgröße oder den äußeren Abmessungen einer Pakkung bzw. eines zu behandelnden Produktes eingesetzt werden kann. Insbesondere soll eine exakte und sehr einfache Einstellung eines bestimmten Abstandes von der Produktoberfläche zum Ende des Mikrowelleneinspeisekanals auch bei unterschiedlichster Produkt- oder Packungsgröße während des laufenden Betriebes der Anlage durchführbar sein.

Die Aufgabe wird gelöst durch die im kennzeichnenden Teil des ersten Patentanspruchs niedergelegten Merkmale.

Durch die von außen vorzunehmende Verstellung der Eintauchtiefe der Mikrowelleneinspeisekanäle bzw. Hohlleiter in die Behandlungskammer, kann die Anlage an jede Produkthöhe, unter Beibehaltung eines bestimmten Abstandes vom Austritt der Kanäle zur Produktoberfläche, angepaßt werden.

Von großer Bedeutung ist, daß die Verstellung der Eintauchtiefe der Mikrowelleneinspeisekanäle durch außerhalb der Behandlungskammer angeordnete Aggregate und während des Betriebes der Anlage vorgenommen werden kann, wodurch in kürzester Zeit eine optimale Behandlung mit Mikrowellenenergie erfolgen kann, die noch dazu sehr energieverlustarm ist, weil die Mikrowellenenergie gezielt in das zu behandelnde Produkt geleitet wird. Durch diese Maßnahme verringert sich die gesamte für einen Vorgang erforderliche Energiemenge.

Die axiale Verstellung der Eintauchtiefe der Einspeisekanäle erfolgt in bevorzugter Weise mittels außerhalb der Behandlungskammer an die Kanäle angreifende Hydraulik- oder Pneumatikzylinder.

Auch eine axiale Verstellung mit einem Kurven- oder Zahnstangengetriebe ist sehr vorteilhaft, wenn nicht bereits Pneumatik- oder Hydraulikaggregate vorhanden sind.

Eine zusätzliche Drehung der Einspeisekanäle um ihre Längsmittelachse durch eine außerhalb der Behandlungskammer angeordnete Einrichtung ist besonders vorteilhaft, wenn im Querschnitt rechteckige oder quadratische Einspeisekanäle eingesetzt werden. Der Einsatz von rechteckigen oder quadratischen Einspeisekanälen empfiehlt sich immer dann, wenn Produkte oder Verpackungen auf dem durchlaufenden Transportband angeordnet sind, die auch eine rechteckige oder quadratische Oberfläche aufweisen, weil dann durch eine Einstellung des Abstandes zwischen Austrittsöffnung des Einspeisekanals und der Produktoberfläche und zusätzlich durch den Einsatz eines rechteckigen Einspeisekanals für eine rechteckige Produktoberfläche eine optimale Einleitung der Mikrowellenenergie in das Produkt erfolgt. Energieverluste durch eine Strahlung der Mikrowelle über die Produktränder hinaus, werden somit wirkungsvoll vermieden.

Um ein Produkt einer runden Oberfläche, z.B. ein verpacktes Tellergericht, optimal zu behandeln, ist eine zyklische oder eine konstante Drehung eines rechteckigen oder quadratischen Einspeisekanals besonders vorteilhaft, weil dann auch mit einem rechteckigen Einspeisekanal ein rundes Produkt optimal behandelt werden kann. Ansonsten müßten runde Einspeisekanäle eingesetzt werden.

Ausführungsbeispiele der Erfindung werden in der Zeichnung gezeigt und nachfolgend erläutert.

Es zeigen:
- Fig. 1: einen Querschnitt durch eine runde Behandlungskammer mit Einspeisekanälen
- Fig. 2: einen schematischen Zahnstangentrieb für eine axiale Verstellung der Einspeisekanäle
- Fig. 3: eine schematische axiale Verstelleinrichtung mittels eines Exzenters
- Fig. 4: eine schematische Verstelleinrichtung für eine drehende Verstellung des Einspeisekanals
- Fig. 5: eine schematische Darstellung eines Schneckentriebes für eine ständige Rotation des Einspeisekanals um seine Längsachse
- Fig. 6: eine schematische Darstellung einer Einrichtung zum reversierenden Drehen eines Einspeisekanals
- Fig. 7: eine schematische Darstellung einer weiteren Einrichtung zum reversierenden Drehen eines Einspeisekanals
- Fig. 8: eine axiale Verstelleinrichtung ähnlich der in Fig. 1 gezeigten Einrichtung

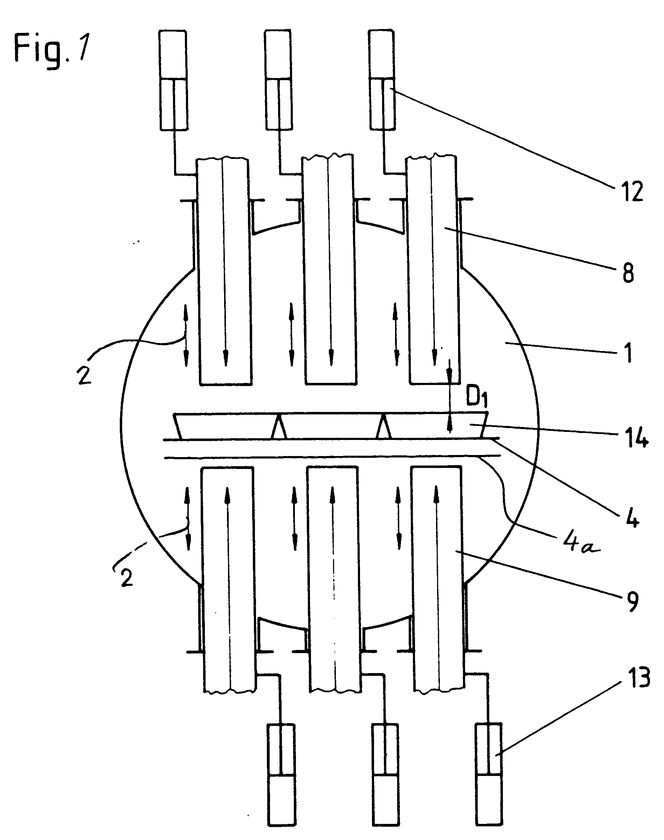

Bei dem in Fig. 1 gezeigten Querschnitt durch eine runde Behandlungskammer 1 werden jeweils drei von oben durch die Wandung der Kammer 1 geführte Hohlleiter oder Mikrowelleneinspeisekanäle 8 gezeigt, die mit ihrer Austrittsöffnung auf verpackte Tellergerichte 14 zeigen.

Die Tellergerichte sind auf einem endlosen antreibbar ausgebildeten Transportband 4 angeordnet, dessen zurücklaufendes leeres Trum mit 4a bezeichnet ist.

Von unten sind die Mikrowelleneinspeisekanäle 9 durch die Wandung der Behandlungskammer 1 geführt und zeigen ebenfalls auf die verpackten Tellergerichte.

Die Einspeisekanäle 8 und 9, an die jeweils einzelne nicht dargestellte Mikrowellengeneratoren angeordnet sind, werden mittels außerhalb der Kammer angeordnete, schematisch dargestellte Pneumatik bzw. Hydraulikzylinder 12, 13 axial verstellt in Richtung der eingezeichneten Pfeile 2.

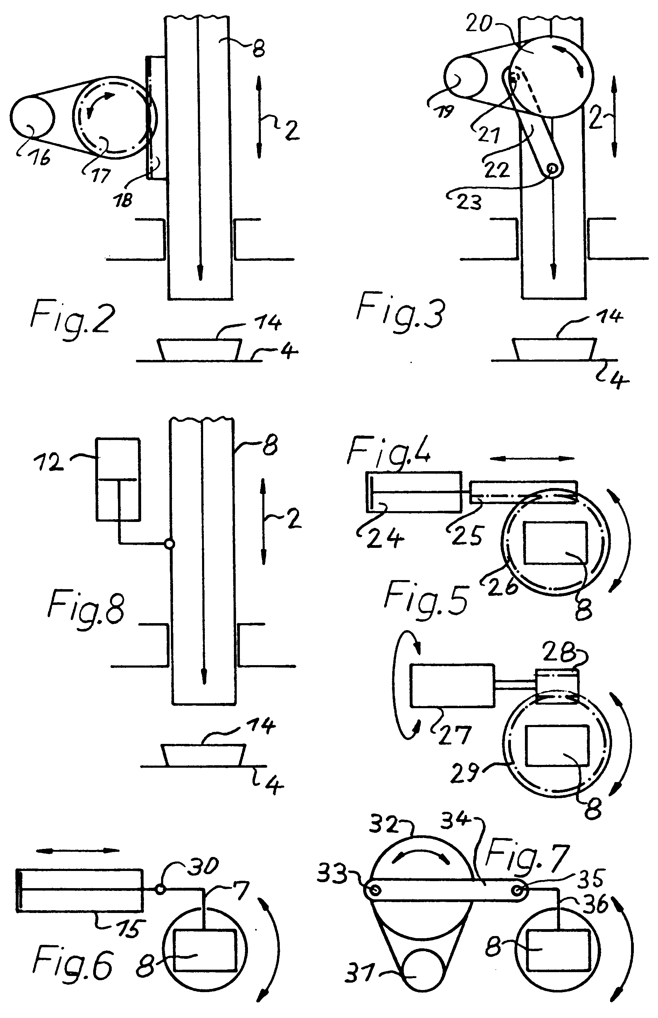

In Fig. 2 wird ein Zahnstangentrieb gezeigt mit einem Antrieb 16, der mittels Keilriemen eine Zahnscheibe 17 antriebt, die wiederum in eine an Hohlleiter 8 befestigte Zahnstange 18 eingreift. Durch eine Betätigung des Antriebes 16 kann der Mikrowelleneinspeisekanal 8 auf einen bestimmten Abstand zum Lebensmittelbehälter 14 stufenlos eingestellt werden.

In Fig. 3 wird eine weitere axiale Einstellmöglichkeit der Kanäle 8 aufgezeigt. Mittels der durch den Antrieb 19 gedrehten Exzenterscheibe 20 wird über eine Pleuelstange 22 der Kanal 8 axial verstellt.

In Fig. 4 wird eine Einrichtung zum Drehen des Kanals 8 um seine Längsachse aufgezeigt. Durch den doppelt wirkenden Zylinder 24 wird eine Zahnstange 25 betätigt, die in eine an den Kanal 8 befestigte Zahnscheibe 26 eingreift und somit eine Drehung des Kanals 8 erlaubt. Mittels dieser Einrichtung kann auch eine zyklische bzw. reversierende Drehung des Kanals 8 verwirklicht werden, die vorteilhaft ist, wenn ein rechteckiger Einspeisekanal eingesetzt wird für die Mikrowellenbeaufschlagung eines runden Produktes. Der rechteckige Austrittsquerschnitt eines sich drehenden Kanals 8 überstreicht somit auch die Randbereiche des runden Produktes, ohne daß ein runder Querschnitt eines Mikrowelleneinspeisekanals eingesetzt werden muß. Der Austrittsquerschnitt des Kanals sollte geometrisch ähnlich der Produktoberfläche ausgebildet und die Austrittsöffnung in einem bestimmten Abstand zur Produktoberfläche angeordnet sein. Durch die stufenlose axiale Verstellung der Kanäle 8 und 9 und durch eine zusätzliche Drehung der Kanäle um ihre Längsachse können somit energieeinsparende und zugleich eine gleichmäßige Temperatur im Produkt ermöglichende Bedingungen geschaffen werden, ohne daß die Behandlungskammer geöffnet werden muß.

In Fig. 5 wird eine weitere Einstelleinrichtung zum permanenten Drehen der Kanäle 8 gezeigt, die einen Schneckentrieb 27, 28 zeigt, der mit einem, am Kanal 8 befestigten Schneckenrad 29 zusammenwirkt.

Bei einer axialen Verstellung der Kanäle 8 und 9 muß im Falle einer zusätzlichen Drehung der Kanäle 8 und 9 entweder die Einrichtung zum Drehen zusammen mit dem Kanal 8 axial in Richtung der Längsachse der Kanäle mitverstellt werden oder umgekehrt, d. h. die Einstelleinrichtung zum axialen Kanalverstellen wird zusammen mit dem Kanal axial verstellt und die Einrichtung zum Drehen des Kanals verbleibt an ihrem Verstellort.

Fig. 6 zeigt einen doppelt wirkenden Zylinder 15 dessen Kolbenstange mit einem Gelenk 30 verbunden ist, an dem auch ein Gestänge 7 befestigt ist. Das Gestänge 7 steht mit dem Kanal 8 in Verbindung. Mittels dieser Verstelleinrichtung ist eine reversierende Drehung des Kanal 8 durchführbar.

Fig. 7 zeigt eine weitere Verstellmöglichkeit für eine reversierende Verstellung des Kanals 8 mittels eines Exzentertriebes 31 und 32, der über ein Drehgelenk 33 und einer Pleuelstange 34 mit dem Drehgelenk 35 verbunden ist. Das Gestänge 36 verbindet das Drehgelenk 35 mit dem Kanal 8, so daß bei einer Betätigung des Antriebes 31 eine reversierende Bewegung des Kanals 8 um seine Längsachse durchgeführt wird.

## Patentansprüche

1. Vorrichtung zum kontinuierlichen, gleichmäßigen, schonenden und schnellen Erwärmen, Pasteurisieren und Sterilisieren von Lebensmitteln oder dergleichen, durch eine längliche Mikrowellenbehandlungskammer, durch die ein endloses Transportband geführt wird, mit in Behältern oder in abgeschlossenen, mikrowellendurchlässigen Verpackungen sich befindenden Lebensmitteln, mit von oben und/oder unter in die Behandlungskammer geführten Mikrowelleneinspeisekanälen, an die Mikrowellengeneratoren angeschlossen sind,
**kennzeichnet durch**
eine, eine Verstellung während des Betriebes der Vorrichtung der Mikrowelleneinspeisekanäle (8, 9) in Richtung ihrer Längsmittelachse erlaubende, außerhalb der Behandlungskammer angeordnete Verstelleinrichtung.

2. Vorrichtung nach Anspruch 1,
**dadurch gekennzeichnet,**
daß die Einrichtung zum Verstellen der Mikrowelleneinspeisekanäle (8, 9) in Richtung ihrer Längsmittelachse als außerhalb der Behandlungskammer angeordnete, an die Einspeisekanäle angreifende Pneumatik/Hydraulikzylinder (12, 13) oder als Kurvengetriebe (19-23) bzw. Zahnstangengetriebe (16, 17, 18) ausgebildet ist.

3. Vorrichtung nach Anspruch 1,
**dadurch gekennzeichnet,**
daß die Einrichtung zum axialen Verstellen der Mikrowelleneinspeisekanäle zusätzlich zum Drehen der Mikrowelleneinspeisekanäle um ihre Längsmittelachse ausgebildet ist.

4. Vorrichtung nach den Ansprüchen 1 und 3
**dadurch gekennzeichnet,**
daß die Einrichtung zum Drehen der Mikrowelleneinspeisekanäle (8, 9) um ihre Längsmittelachse als Pneumatik/Hydraulikzylinder (15), als Kurvengetriebe (31-35), Zahnstangengetriebe (24, 25, 26) oder als ein Schneckenritzel (28), welches in eine Außenverzahnung eines um den Einspeisekanal (8, 9) angeordneten Schneckenkranzes (29) eingreift, ausgebildet ist.

5. Vorrichtung nach den Ansprüchen 1 bis 3,
**dadurch gekennzeichnet,**
daß die Verstellung der Einspeisekanäle in Richtung ihrer Längsmittelachse bzw. die Verdrehung in Umfangsrichtung für jeden Mikrowelleneinspeisekanal einzeln oder gruppenweise für eine vorher festgelegte Gruppe von Einspeisekanälen aufgrund eines Programmes eines Rechners erfolgt.

6. Vorrichtung nach den Ansprüchen 1 - 4
**dadurch gekennzeichnet,**
daß die Drehung der Einspeisekanäle um ihre Längsmittelachse zyklisch oder konstant durchgeführt wird.

## Claims

1. Apparatus for continuous, uniform, careful, and fast heating, pasteurizing, and sterilizing of food or the like by means of an oblong microwave treatment chamber through which an endless conveyor belt with food in containers or in closed, microwave-permeable packages is led and into which microwave supply channels with microwave generators connected thereto are introduced from above and/or below,
**characterized in that**
an adjusting device, which is arranged outside the treatment chamber, allows an adjustment of the microwave supply channels (8, 9) in direction of their longitudinal centre axes during the operation of the apparatus.

2. An apparatus as recited in claim 1,
**characterized in that**
the device for adjusting the microwave supply channels (8, 9) in direction of their longitudinal centre axes is arranged outside the treatment chamber and designed either as pneumatic/hydraulic cylinders (12, 13) acting on the supply channels or as a cam mechanism (19-23) and/or rack gear (16, 17, 18).

3. An apparatus as recited in claim 1,
**characterized in that**
the device for the axial adjustment of the microwave supply channels is additionally designed for turning the microwave supply channels about their longitudinal centre axes.

4. An apparatus as recited in claims 1 and 3,
**characterized in that**
the device for turning the microwave supply channels (8, 9) about their longitudinal centre axes is designed as pneumatic/hydraulic cylinders (15), as a cam mechanism (31-35), as a rack gear (24, 25, 26), or as a worm pinion (28) engaging with an external toothing of a worm wheel rim (29) arranged around the supply channel (8, 9).

5. An apparatus as recited in claims 1 to 3,
**characterized in that**
the adjustment of the supply channels in direction of their longitudinal centre axes and/or the turning in circumferential direction are effected either individually for each microwave supply channel or in groups for a previously determined group of supply channels on the basis of a computer program.

6. An apparatus as recited in claims 1 to 4,
**characterized in that**
the rotation of the supply channels about their longitudinal centre axes is effected cyclically or constantly.

## Revendications

1. Dispositif pour le chauffage, la pasteurisation et la stérilisation en continu, uniforme, soigneux et rapide de denrées alimentaires ou pareilles, par une chambre de traitement à micro-ondes oblongue, traversée par une bande transporteuse sans fin, avec des denrées alimentaires se trouvant dans des récipients ou des emballages fermés et perméables aux micro-ondes, avec des canaux d'alimentation en micro-ondes introduits d'en haut et/ou d'en bas dans la chambre de traitement, auxquels sont connectés des générateurs en micro-ondes,
**caractérisé en ce que**
le réglage des canaux d'alimentation en micro-ondes (8, 9) en direction de leur axe longitudinal pendant le fonctionnement du dispositif est possible grâce à un dispositif de réglage disposé à l'extérieur de la chambre de traitement.

2. Dispositif selon la revendication 1,
**caractérisé en ce que**
le dispositif pour le réglage des canaux d'alimentation en micro-ondes (8, 9) en direction de leur axe longitudinal est réalisé sous forme de vérins pneumatiques/hydrauliques (12, 13) disposés à l'extérieur de la chambre de traitement et agissant sur les canaux d'alimentation ou sous forme d'une commande à cames (19 - 23) et/ou à crémaillère (16, 17, 18).

3. Dispositif selon la revendication 1,
**caractérisé en ce que**
le dispositif pour le réglage axial des canaux d'alimentation en micro-ondes est conçu en plus d'une manière permettant une rotation des canaux d'alimentation en micro-ondes autour de leur axe longitudinal.

4. Dispositif selon les revendications 1 et 3,
**caractérisé en ce que**
le dispositif pour la rotation des canaux d'alimentation en micro-ondes (8, 9) autour de leur axe longitudinal est réalisé sous forme de vérins pneumatiques/hydrauliques (15), de commande à cames (31 - 35), de commande à crémaillère (24, 25, 26) ou sous forme de commande à pignon (28) qui s'engrène dans la denture extérieure d'une couronne à vis sans fin (29) disposée autour d'un canal d'alimentation (8, 9).

5. Dispositif selon les revendications 1 à 3,
**caractérisé en ce que**
le réglage des canaux d'alimentation en direction de leur axe longitudinal et/ou mouvement oscillant en direction de la circonférence est réalisé par un programme d'ordinateur, soit séparémment pour chaque canal d'alimentation en micro-ondes, soit par groupes pour un groupe prédéfini de canaux d'alimentation.

6. Dispositif selon les revendications 1 - 4
**caractérisé en ce que**
la rotation des canaux d'alimentation autour de leur axe longitudinal est effectuée en cycliquement ou d'une manière constante.
